# EUROPÄISCHE PATENTSCHRIFT

(11) **EP 1 009 698 B1**
(45) Veröffentlichungstag und Bekanntmachung des Hinweises auf die Patenterteilung: **10.07.2002**
(21) Anmeldenummer: 98919252.1
(22) Anmeldetag: 09.04.1998
(51) Int. Cl.: B65G 69/00

(54) **FESTHALTEVORRICHTUNG FÜR RÄDER EINES FAHRZEUGES**
SECURING ASSEMBLY FOR AUTOMOBILE WHEELS
DISPOSITIF DE BLOCAGE DESTINE AUX ROUES D'UN VEHICULE

(30) Priorität: 03.09.1997 DE 29715777 U
(43) Veröffentlichungstag der Anmeldung: 21.06.2000
(73) Patentinhaber: VAN WIJK NEDERLAND B.V., NL-8243 PJ Lelystad (NL)
(72) Erfinder: MÖGELE, Reinhard, NL-8252 JV Dronten (NL)
(74) Vertreter: Beil, Hans Christoph, Dr.
(86) Internationale Anmeldenummer: EP9802105
(87) Internationale Veröffentlichungsnummer: WO9911550

(56) Entgegenhaltungen:
- DE-U- 29 610 922

## Beschreibung

### Technisches Gebiet

Gegenstand der Erfindung ist eine Festhaltevorrichtung für Räder eines Fahrzeugs an einer Laderampe mit den Merkmalen des Anspruchs 1.

### Stand der Technik

Um das Wegfahren eines Fahrzeuges von der Rampe während des Verladevorganges zu verhindern gibt es Vorrichtungen, die das an der Rampe stehende Fahrzeug festhalten.

EP-B-0 452 519 und EP-A-0 548 633 zeigen einen Haken, der den Unterfahrschutz des Fahrzeuges festhält. Nachteil dieser Systeme ist, daß nicht alle Fahrzeuge einen Unterfahrschutz haben oder der Freiraum, der zum Hochdrehen des Hakens erforderlich ist, zu klein ist.

Die Lösung der EP-A-0 609 049 hat den Nachteil, daß Witterungseinflüsse, wie Eis und Schnee, leicht die Wirkung der Vorrichtung beeinträchtigen können. Die Vorrichtung gemäß EP-A-0 580 415 hat den Nachteil, daß sie in den Boden eingebaut werden muß, was hohe Kosten mit sich bringt.

In PCT/US95/24353, PCT/US96/18863, PCT/US95/13098 und DE-U-29610922 werden Systeme beschrieben, bei denen das Rad des Fahrzeuges einen Mitnehmer betätigt, der über ein elastisches Element mit dem eigentlichen Blockiermechanismus verbunden ist. Mittels dieses Elementes wird die Blockiervorrichtung hinter dem Rad hergezogen. Nachteil dieser Systeme ist, daß durch verschiedene Raddurchmesser die Kraft, mit der der Blockiermechanismus beim Anfahren gegen das Rad drückt, stets verschieden ist und bei verschmutzten und vereisten Rädern zu Problemen führen kann.

Aus DE-U-296 10 922 ist eine Vorrichtung bekannt, die aus einer die gesamte Vorrichtung tragenden Bodenplatte, beidseitig darauf angeordneten Stützplatten und einem auf den Stützplatten verschiebbaren und darauf blockierbaren Rohr besteht. Die Blockierung des Rohres muß dabei von Hand erfolgen und ist nicht ganz betriebssicher.

Alle bekannten Systeme haben den Nachteil, daß sie teure Antriebe benötigen, und daß eine Schnee- und Eisräumung problematisch ist.

### Darstellung der Erfindung

Ziel der Erfindung ist es, ein System zu schaffen, das sicher nahezu alle Fahrzeuge festhält, das keinen teuren Antrieb und auch keinerlei Fundament benötigt und das beim Einfahren auf das Rad unabhängig von dessen Durchmesser stets die gleiche Kraft ausübt.

Diese Aufgabe wird durch die in Anspruch 1 beschriebene Gestaltung gelöst.

Die erfindungsgemäße Vorrichtung besteht aus einer die gesamte Vorrichtung tragenden Bodenplatte, beidseitig darauf angeordneten, gegeneinander höhenverstellbaren unteren Stützplatten und oberen Klemmleisten, einem zwischen den Stützplatten und den Klemmleisten angeordneten und zwischen ihnen blockierbarem Rohr, am rampenseitigen Ende der Vorrichtung angeordneten Spannelementen, die über Zugkabel beidseitig am Rohr angreifen und.einem entriegelbarem Sperrmechanismus, der das Rohr gegen den Zug der Spannelemente in der Ruhestellung am Boden hält.

Die hintersten Räder eines rückwärts an die Rampe heranfahrenden Fahrzeuges rollen über das Rohr, das in seiner Ruhestellung auf dem Boden liegt und dort durch den Sperrmechanismus gehalten wird. Dieser Sperrmechanismus wird dann durch das Rad oder auf andere Weise entriegelt und das Rohr rollt jetzt hinter den Rädern Richtung Rampe. Hat das Fahrzeug die Rampe erreicht, führt das Anheben der unteren Stützplatten zum Blockieren des Rohres, die beiden hintersten Räder werden jetzt festgehalten.

Nach Beendigung des Ladevorganges wird die Verriegelung durch Absenken der unteren Stützplatten wieder aufgehoben, das Fahrzeug fährt weg und schiebt das Rohr wieder vor sich mit, bis dieses wieder in seine Ruhestellung fällt und durch den Sperrmechanismus wieder festgehalten wird. Befindet sich das Rohr wieder in Ruhestellung, fahren die Fahrzeugräder wieder über dieses hinweg, das Fahrzeug kann die Rampe ungehindert verlassen.

Da das gesamte System auf Platten montiert ist, auf denen die zu verriegelnden Räder stehen, halten diese die gesamte Vorrichtung durch Ihr Eigengewicht an Ort und Stelle, teure Verankerungen oder Fundamente sind überflüssig.

### Kurze Beschreibung der Zeichnungen

An Hand der beigefügten Zeichnungen wird die Erfindung näher erläutert, in denen
Figur 1 eine Draufsicht auf das System zeigt,
Figur 2 eine Draufsicht mit gerade anfahrendem Fahrzeug zeigt,
Figur 3 eine Draufsicht mit verriegeltem Fahrzeug zeigt,
Figur 4 eine Seitenansicht bei anfahrendem Fahrzeug zeigt,
Figur 5 eine Seitenansicht bei Betätigung des Sperrmechanismus zeigt,
Figur 6 eine Seitenansicht mit dem Rad folgendem Rohr zeigt,
Figur 7 eine Seitenansicht mit verriegeltem Rohr zeigt,
Figur 8 den Verriegelungsmechanismus in entriegeltem Stand zeigt,
Figur 9 den Verriegelungsmechanismus in verriegeltem Stand zeigt,
Figur 10 eine Seitenansicht des Sperrmechanismus mit Rohr im Ruhestand zeigt,
Figur 11 einen Schnitt entlang Achse A-A von Figur 10 zeigt,
Figur 12 eine Seitenansicht des Sperrmechanismus mit gerade entriegeltem Rohr zeigt,
Figur 13 einen Schnitt entlang Achse B-B von Figur 12 zeigt und
Figur 14 eine Seite der Erfindung im Schrägriß zeigt

In den Zeichnungen ist teilweise nur die eine Hälfte der Vorrichtung gezeigt. Es versteht sich von selbst, daß dies keine Beschränkung darstellen soll. Ebenso wird in der nachfolgenden Beschreibung der bevorzugten Ausführungsformen der Einfachheit halber nur die eine Hälfte der Vorrichtung erläutert.

### Wege zur Ausführung der Erfindung

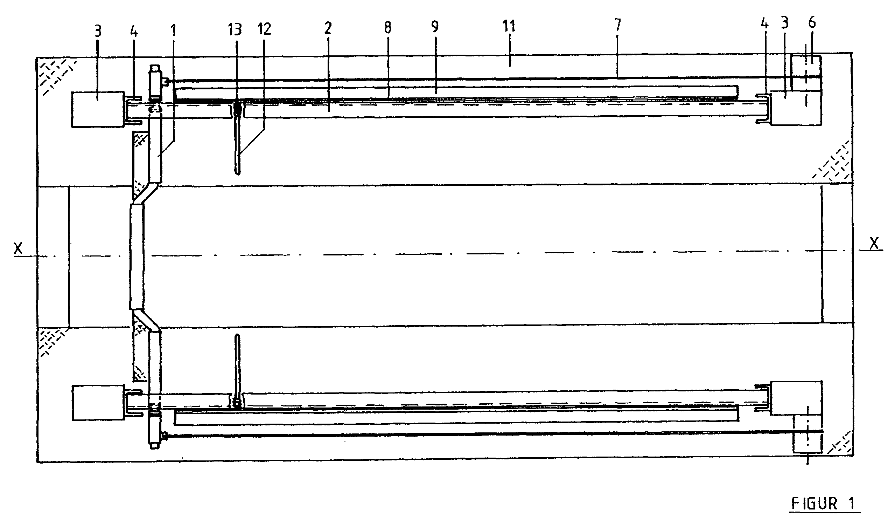

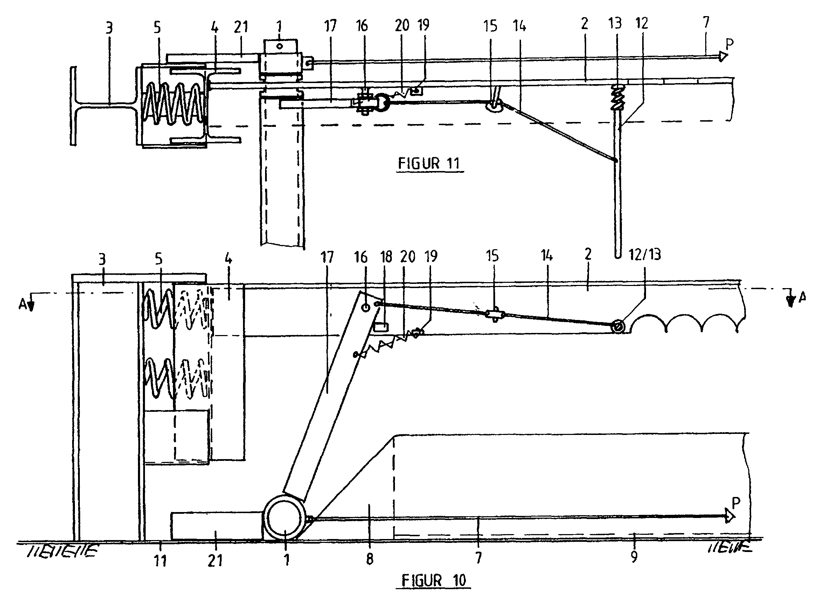

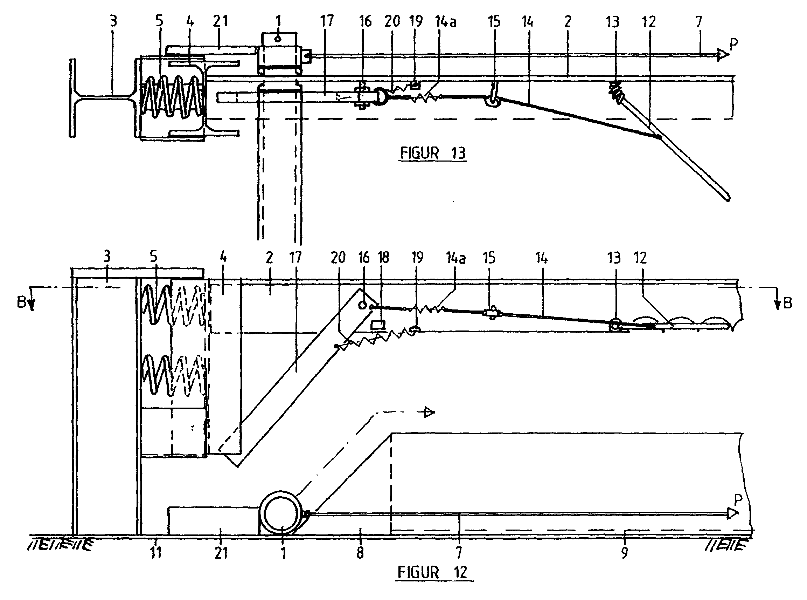

Figur 1 bis 3 zeigen das Basisprinzip der Erfindung, welche aus zwei um die X -X- Achse symmetrischen Teilen besteht Jeder Teil der Vorrichtung besteht jeweils aus einem Teil einer Bodenplatte (11), auf dem Stützen (3) und Stützwinkel (9) befestigt sind . In den Stützen (3) gleiten die die Klemmleiste (2) tragenden Profile (4). In Figur 1 befindet sich Rohr (1) in Ruhestellung. Das Spannelement (6) übt über das Zugkabel (7) einen Zug auf das Rohr (1) in Richtung der Rampe aus. Der in Fig. 10 und 12 näher gezeigte Sperrmechanismus mit Arm (17) verhindert dies.

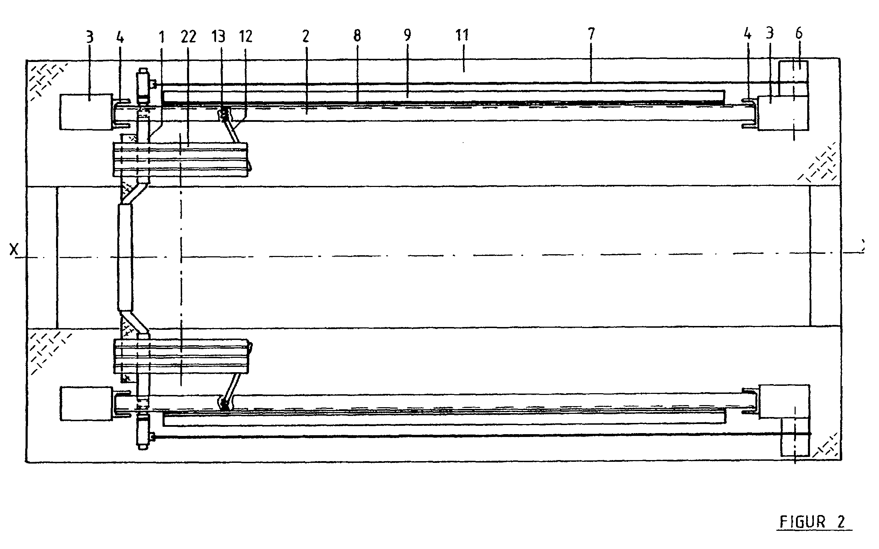

In Figur 2 fährt ein Fahrzeug rückwärts in die Festhaltevorrichtung und die hintersten Räder (22) kippen die auf einer Druckfeder (13) gelagerte Klinke (12) in Richtung Rampe. Über das an der Klinke (12) befestigte und über eine Umlenkrolle (15) laufende Kabel (14) wird der kürzere Armteil des um die Achse (16) schenkbaren Arms (17) in Richtung der Rampe gezogen und der Sperrmechanismus entriegelt. Das Rohr (1) läuft durch Spannelemente (6) gezogen hinter den Rädern (22) in Richtung Rampe.

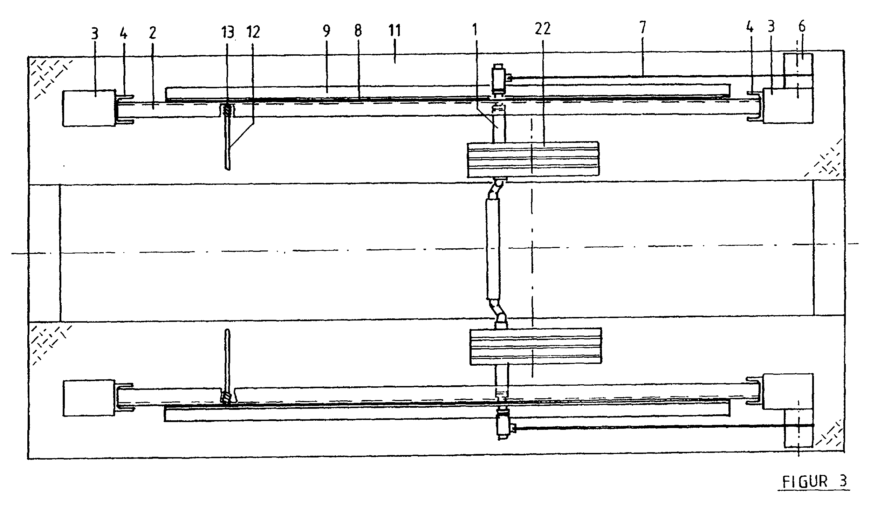

Steht das Fahrzeug nun an der Rampe, wie in Figur 3 gezeigt, wird die untere Stützplatte (8) angehoben und das Rohr (1) beidseitig festgeklemmt, das Fahrzeug ist jetzt gesichert.

Nach dem Absenken der Stützplatten (8) kann das Fahrzeug von der Rampe wegfahren. Die Räder (22) schieben das Rohr(1) dabei vor sich her, bis es wieder in die Ruhestellung gelangt, Spannelemente (6) werden weiter gespannt, Sperrmechanismus (17) rastet wieder ein. Die Situation, wie in Figur 1 gezeigt, ist wieder hergestellt.

Figur (4) zeigt, wie Rad (22) über das in Ruhestellung befindliches Rohr (1) fährt, die Klinke (12) des Sperrmechanismus (17) ist noch nicht beaufschlagt.

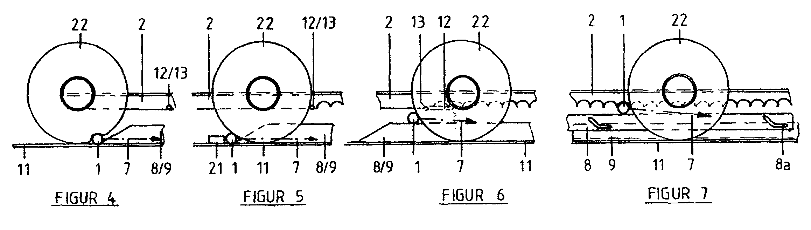

In Figur 5 wird die Klinke (12) beaufschlagt, der Sperrmechanismus (17) entriegelt, das Rohr (1) wird über die Schräge der Stützplatte (8) durch Spennelement (6) Richtung Rampe gezogen und folgt unmittelbar dem Rad (22), wie in Figur 6 dargestellt. Figur (7) zeigt das gesicherte Rad (22), wobei Rohr (1) zwischen der Klemmleiste (2) und der jetzt angehobenen Stützplatte (8) eingeklemmt ist.

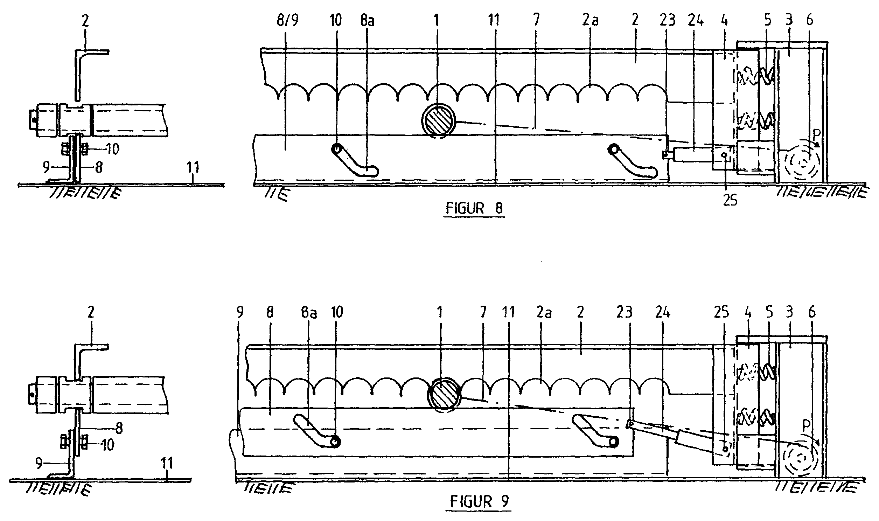

Die Funktion des Verriegelungsmechanismus ist aus Fig. 8 und 9 ersichtlich.
Die Klemmleiste (2) ist fest mit Profil (4) verbunden, welches In Stützen (3) gelagert ist und kann horizontal ca.50 mm zur Rampe hin und ca.50 mm von der Rampe weg bewegen, wobei sie die Federkraft der Federn (5) überwinden muß. Dies sorgt dafür, daß das Rohr (1) auch im blockierten Zustand stets Kontakt zum Rad (22) hält. Ein Winkel (9) ist mit der Bodenplatte (11) fest verbunden und weist über die Gesamtlänge seines senkrechten Teils mehrere Bohrungen auf. Die Stützplatte (8) ihrerseits weist spezielle Langlöcher (8a) auf, die erst ein Stück horizontal verlaufen und dann schräg nach oben in Richtung weg von der Rampe verlaufen. Schrauben (10) verbinden Winkel (9) und Stützplatte (8) in der Weise, daß die Schrauben (10) in den Langföchern(8a) gleiten können. Die Stützplatte (8) ist über eine in der Achse (23) befestigte Schubvorrichtung (24) mit dem Profil (4) verbunden. Die Betätigung der Schubvorrichtung (24) führt aufgrund der Führung der Stützplatte (8) durch die in den Langlöchern (8a) gleitenden Schrauben (10) zum Anheben der Stützplatte (8) und somit zum Einklemmen von Rohr (1) zwischen Stützplatte (9) und Klemmleiste (2). Da die Schrauben (10) sich im Klemmzustand auf der Horizontalfläche des Langlochs (8a) von Stützplatte (8) befinden, kann keine Kraft durch Rad (22) auf die Schubvorrichtung (24) wirken.

Es versteht sich von selbst, daß auch die Winkel (9) spezielle Langlöcher und die Stützplatte (8) runde Bohrungen aufweisen können, nur muß dann das Horizontalteil des Langlochs oberhalb des schrägen Lochteils liegen.

Wird die Schubvorrichtung (24) wieder eingefahren, senkt sich Stützplatte (8) wieder und das Rohr (1) kommt frei, das Fahrzeug kann wieder wegfahren.

Figuren 10 bis 13 zeigen einen bevorzugten und vorstehend schon erwähnten Sperrmechanismus für das Rohr (1), wobei Figuren 10 und 11 den verriegelten und Figur 12 und 13 den entriegelten Zustand zeigen. Rohr (1) liegt im Ruhezustand vor der Schräge der Stützplatte (8) auf der Bodenplatte (11) gegen einen Anschlag (21) an. Der Arm (17) des Sperrmechanismus ist mit dem Lager (16) drehbar an der Klemmleiste (2) befestigt. Eine im Halter (19) an der Klemmleiste (2) befestigte Zugfeder (20) zieht Arm (17) gegen den Anschlag (18), der Arm (17) steht so direkt über Rohr (1), welches trotz der Zugkraft P nicht über die Schräge von Stützplatte (8) laufen kann. Die mit einer Druckfeder (13) an der Klemmleiste (2) befestigte Klinke (12) ist über ein Kabel (14) via Umlenkrolle (15) mit einer oberhalb der Achse (16) angreifenden Bohrung des Arms (17) verbunden. Um das Kabel (14) stets unter Spannung zu halten, kann eine Federelement (14a) eingefügt sein.

Wird die Klinke (12) beaufschlagt, zieht das Kabel (15) den Arm (17) an seiner Oberseite in Richtung der Klinke (12), die Feder (20) wird gespannt, Rohr (1) kommt frei und rollt, wie mit strichliertem Pfeil in Fig. 12 angedeutet, über Schräge der Stützplatte (8) und dann über die Stützplatte Richtung Rampe. Das Rad (22) kann dann in der Endstellung des Fahrzeugs an der Rampe verriegelt werden.

Nach der Entriegelung schiebt das Rad (22) das Rohr (1) wieder vor sich her von der Rampe weg. Der Arm (17) sorgt über die Feder (20) dafür, daß das Rohr (1) über die Schräge der Stützplatte (8) nach unten rollt und gegen den Anschlag (21) zu liegen kommt.

### Beste Wege zur Ausführung der Erfindung

In einer weiteren nicht bildlich dargestellten bevorzugten Ausführungsform des Verriegelungsmechanismus wird die Schräge der Stützplatte (8) durch ein vertikales Ende ersetzt, welches das Rohr (1) daran hindert, in Richtung der Rampe zu rollen. Ein Kipphebel hebt dann bei Beaufschlagung durch das Rad (22) des Fahrzeugs das Rohr (1) so weit an, bis es auf der horizontalen Fläche der Stützplatte (8) liegt. Nun rollt das Rohr (1) auch wieder über die Stützplatte (8) durch Zugkabel (7) gezogen in Richtung Rampe. Das Rad (22) kann dann in der Endstellung des Fahrzeugs an der Rampe verriegelt werden.

Nach der Entriegelung schiebt das Rad (22) das Rohr (1) wieder vor sich her von der Rampe weg. Das Rohr (1) fällt wieder in seine Ruhestellung vor dem vertikalen Ende der Stützplatte (8) und kippt dabei den Stützhebel wieder in seine Ausgangsstellung.

Der Vorteil dieser weiteren begünstigten Ausführungsform ist, daß seine entriegelung nur durch ein Fahrzeug erfolgen kann, das schwer genug ist, um das Rohr (1) anzuheben; ein unbeabsichtigtes Entriegeln ist also nicht möglich.

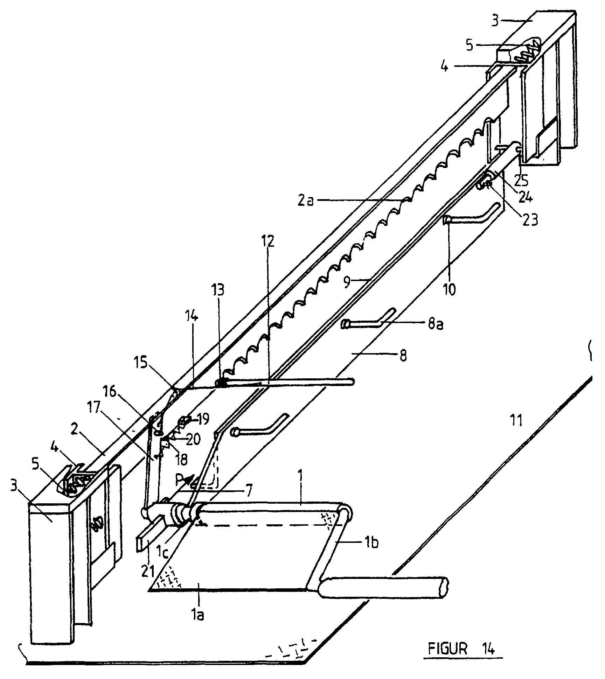

Figur 14 zeigt einen Schrägriß zur Verdeutlichung eine Hälfte des Systems. Das Rohr (1) ist vorzugsweise, wie auch aus Figur 1 ersichtlich, im Mittelteil mit zwei Knicken (1b) versehen, bildet also eine trapezförmige Linie, um die Bodenfreiheit unter dem Fahrzeug so wenig wie möglich zu begrenzen.

Es ist auch deutlich zu erkennen, daß das Rohr (1) vorzugsweise beidseitig eine konisch geformte Laufrolle (1c) sowie ein Auffahrblech (1a) aufweist. Anstelle des gezeigten Sperrmechanismus, der sich beim Heranfahren des Rades (22) von selbst löst, kann man auch einen Sperrmechanismus benutzen, der erst betätigt wird, wenn das Fahrzeug an der Rampe steht und dann auf Knopfdruck oder ähnlich gelöst wird. Dann wird nicht das hinterste Rad, sondern das jeweils dem Rohr (1) am nächsten Richtung Rampe gelegene Rad festgehalten.

## Patentansprüche

1. Festhaltevorrichtung für die Räder von Fahrzeugen an einer Laderampe, bestehend aus einer die gesamte Vorrichtung tragenden Bodenplatte (11), beidseitig darauf angeordneten unteren Stützplatten (8) und einem auf den Stützplatten verschiebbaren und darauf blockierbaren Rohr (1), **gekennzeichnet dadurch, daß**
(a) die unteren Stützplatten (8) höhenverstellbar sind,
(b) über ihnen obere Klemmleisten (2) angeordnet sind,
(c) am rampenseitigen Ende der Vorrichtung angeordnete Spannelemente (6), über Zugkabel (7) beidseitig am Rohr (1) angreifen und
(d) ein entriegelbarer Sperrmechanismus vorgesehen ist, der das Rohr (1) gegen den Zug der Spannelemente (6) in der Ruhestellung am Boden hält.

2. Vorrichtung nach Anspruch 1, **dadurch gekennzeichnet, daß** der Sperrmechanismus durch das Rad des einfahrenden Fahrzeugs entriegelbar ist.

3. Vorrichtung nach Anspruch 1 oder 2, **dadurch gekennzeichnet, daß** das Rohr (1) mit Laufrollen (1c) versehen ist.

4. Vorrichtung nach einem derAnsprüche 1 bis 3, **dadurch gekennzeichnet, daß** die Klemmleisten (2) sägezahnartige Kreissegmentausschnitte aufweisen, deren Durchmesser etwas größer als der Durchmesser der Laufrollen (1c) ist.

5. Vorrichtung nach einem der Ansprüche 1 bis 3, **dadurch gekennzeichnet, daß** die Stützplatten (8) gegen die Klemmleisten (2) anhebbar sind.

6. Vorrichtung nach Anspruch 5, **dadurch gekennzeichnet, daß** jede der Stützplatten (8) mindestens zwei Langlöcher (8a) aufweist, welche zuerst horizontal und danach schräg nach oben vom rampenseitigen Ende weg verlaufen, in diesen Langlöchern (8a) fest mit auf der Bodenplatte (11) angebrachten Stützwinkeln (9) verbundene Schrauben (10) gleiten können und die Stützplatten (8) durch eine Schubvorrichtung (24) um die Schrauben (10) in den Langlöchern (8a) verschiebbar sind.

7. Vorrichtung nach Anspruch 6, **dadurch gekennzeichnet, daß** die Schubvorrichtung (24) ein elektrischer Linearantrieb ist.

8. Vorrichtung nach einem der Ansprüche 1 bis 7, **dadurch gekennzeichnet, daß** die Klemmleisten (2) an ihren Enden Profile (4) aufweisen, die über Federn (5) an mit der Bodenplatte (11) fest verbundenen Stützen (3) gelagert sind.

9. Vorrichtung nach einem der Ansprüche 1 bis 8, **dadurch gekennzeichnet, daß** der Sperrmechanismus aus einem um eine Achse drehbaren Arm (17), einer daran und am Widerlager (19) an der Klemmleiste (2) befestigten Zugfeder (20) und einem die Bewegung des Arms (17) nach unten begrenzenden Anschlag (18) besteht.

10. Vorrichtung nach einem der Ansprüch 1 bis 9, **dadurch gekennzeichnet, daß** an den Klemmleisten (2) über eine Druckfeder (13) eine Klinke (12) angeordnet ist, an der ein Kabel (14) befestigt ist, das über eine Umlenkrolle (15) am kurzen Arm des Arms (17) des Sperrmechanismus angreift.

11. Vorrichtung nach einem der Ansprüche 1 bis 10, **dadurch gekennzeichnet, daß** das Rohr (1) in der Mitte einen trapezförmigen Knick aufweist.

12. Vorrichtung nach einem der Ansprüche 1 bis 11, **dadurch gekennzeichnet, daß** am Rohr (1) auf beiden Seiten Auffahrbleche (1a) angebracht sind..

13. Vorrichtung nach einem der Ansprüche 1 bis 12, **dadurch gekennzeichnet, daß** die Spannelemente (6) Torsionsfedern sind.

14. Vorrichtung nach einem der Ansprüche 1 bis 8, **dadurch gekennzeichnet, daß** Rohr (1) über einen durch das Rad (22) beaufschlagten Kipphebel angehoben wwird, bis es auf der Horizontalfläche der Stützplatte (8) aufliegt.

15. Vorrichtung nach einem der Ansprüche 1 bis 8, **dadurch gekennzeichnet, daß** die Rückkehr von Rohr (1) in die Ruhestellung den Kipphebel wieder in seine Ausgangsstellung bringt.

## Claims

1. Securing assembly for vehicle wheels on a loading ramp, consisting of a base plate (11) carrying the entire assembly, lower support plates (8) arranged on either side thereof and a tube (1) which can be displaced on the support plates and blocked thereon, **characterised in that**
(a) the lower support plates (8) are adjustable in height,
(b) upper terminal strips (2) are arranged above them,
(c) fixing elements (6) arranged at the ramp-side end of the assembly act via traction cables (7) on either side of the tube (1) and
(d) an unlockable locking mechanism is provided to hold the tube (1) on the base against the traction of the fixing elements (6) in the rest position.

2. Assembly according to claim 1, **characterised in that** the locking mechanism can be unlocked by the wheel of the approaching vehicle wheel.

3. Assembly according to claim 1 or 2, **characterised in that** the tube (1) is provided with rollers (1c).

4. Assembly according to any of claims 1 to 3, **characterised in that** the terminal strips (2) have sawteeth-like cut-outs in the form of segments of a circle, the diameter of which is substantially greater than the diameter of the rollers (1c).

5. Assembly according to any of claims 1 to 3, **characterised in that** the support plates (8) can be raised toward the terminal rails (2).

6. Assembly according to claim 5, **characterised in that** each of the support plates (8) has at least two slots (8a) which initially extend horizontally and then obliquely upwards from the ramp-side end, screws (10) rigidly connected to support angles (9) placed on the base plate (11) can slide in these slots (8a) and the support plates (8) can be displaced via a pushing device (24) about the screws (10) in the slots (8a).

7. Assembly according to claim 6, **characterised in that** the pushing device (24) is an electric linear drive.

8. Assembly according to any of claims 1 to 7, **characterised in that** the terminal rails (2) have profiles (4) mounted via springs (5) on supports (3) rigidly connected to the base plate (11), at their ends.

9. Assembly according to any of claims 1 to 8, **characterised in that** the locking mechanism consists of an arm (17) rotatable about an axis, a tension spring (20) fastened thereto and to the abutment (19) on the terminal block (2), and a stop (18) limiting the downward movement of the arm (17).

10. Assembly according to any of claims 1 to 9, **characterised in that** a pawl (12) is arranged on the terminal rails (2) via a compression spring (13), to which pawl (12) a cable (14) is secured which acts via a return pulley (15) on the short arm of the arm (17) of the locking mechanism.

11. Assembly according to any of claims 1 to 10, **characterised in that** the tube (1) has a trapezoidal kink in the centre.

12. Assembly according to any of claims 1 to 11, **characterised in that** drive-on metal sheets (1a) are placed on both sides of the tube (1).

13. Assembly according to any of claims 1 to 12, **characterised in that** the fixing elements (6) are torsion springs.

14. Device according to any of claims 1 to 8 **characterised in that** the tube (1) is raised via a rocker arm loaded by the wheel (22) until it rests on the horizontal face of the support plate (8).

15. Assembly according to any of claims 1 to 8, **characterised in that** the return of the tube (1) into the rest position brings the rocker lever into its starting position again.

## Revendications

1. Dispositif de maintien pour les roues de véhicules sur une rampe de chargement, comprenant une plaque de fond (11) qui porte la totalité du dispositif, des plaques de soutien inférieures (8) agencées des deux côtés sur cette plaque de fond, et un tube (1) déplaçable sur les plaques de soutien et susceptible d'être bloqué sur celles-ci, **caractérisé en ce que** :
(a) les plaques de soutien inférieures (8) sont réglables en hauteur,
(b) des barrettes de serrage (2) sont agencées au-dessus de celles-ci,
(c) des éléments de tensionnement (6) agencés à l'extrémité du dispositif côté rampe attaquent le tube (1) sur les deux côtés par l'intermédiaire de câbles de traction (7), et
(d) il est prévu un mécanisme de verrouillage déverrouillable, qui maintient le tube (1) contre le fond dans la position de repos à l'encontre de la traction des éléments de tensionnement (6).

2. Dispositif selon la revendication 1, **caractérisé en ce que** le mécanisme de verrouillage est déverrouillable par la roue du véhicule s'approchant.

3. Dispositif selon l'une ou l'autre des revendications 1 et 2, **caractérisé en ce que** le tube (1) est pourvu de galets de déplacement (1c).

4. Dispositif selon l'une des revendications 1 à 3, **caractérisé en ce que** les barrettes de serrage (2) comportent des découpes en secteurs de cercles analogues à des dents de scie, dont le diamètre est quelque peu supérieur au diamètre des galets de déplacement (1c).

5. Dispositif selon l'une des revendications 1 à 3, **caractérisé en ce que** les plaques de soutien (8) sont susceptibles d'être soulevées contre les barrettes de serrage (2).

6. Dispositif selon la revendication 5, **caractérisé en ce que** chacune des plaques de soutien (8) comporte au moins deux trous oblongs (8a) qui s'étendent tout d'abord horizontalement et ensuite en oblique vers le haut en s'éloignant de l'extrémité côté rampe, **en ce que** des vis (10) reliées à des équerres de soutien (9) montées solidairement sur la plaque de fond (11) sont susceptibles de coulisser dans ces trous oblongs (8a), et **en ce que** les plaques de soutien (8) sont déplaçables dans les trous oblongs (8a) autour des vis (10) au moyen d'un dispositif de poussée (24).

7. Dispositif selon la revendication 6, **caractérisé en ce que** le dispositif de poussée (24) est un entraînement linéaire électrique.

8. Dispositif selon l'une des revendications 1 à 7, **caractérisé en ce que** les barrettes de serrage (2) comportent à leurs extrémités des profils (4) qui sont montés par l'intermédiaire de ressorts (5) sur des supports (3) fermement reliés avec la plaque de fond (11).

9. Dispositif selon l'une des revendications 1 à 8, **caractérisé en ce que** le mécanisme de verrouillage est constitué par un bras (17) en rotation autour d'un axe, par un ressort de traction (20) fixé sur ce bras et sur une attache antagoniste (19) sur la barrette de serrage (2), et par une butée (18) qui limite vers le bas le mouvement du bras (17).

10. Dispositif selon l'une des revendications 1 à 9, **caractérisé en ce qu'**un loquet (12) est agencé sur la barrette de serrage (2) par l'intermédiaire d'un ressort de compression (13), et **en ce que** sur ledit loquet est fixé un câble (14) qui attaque via un galet de renvoi (15) le bras court du bras (17) du mécanisme de verrouillage.

11. Dispositif selon l'une des revendications 1 à 10, **caractérisé en ce que** le tube (1) présente au milieu un pli de forme trapézoïdale.

12. Dispositif selon l'une des revendications 1 à 11, **caractérisé en ce que** des tôles d'approche (1a) sont montées des deux côtés sur le tube (1).

13. Dispositif selon l'une des revendications 1 à 12, **caractérisé en ce que** les éléments de tensionnement (6) sont des ressorts de torsion.

14. Dispositif selon l'une des revendications 1 à 8, **caractérisé en ce que** le tube (1) est soulevé au moyen d'un levier basculant attaqué par la roue (22), jusqu'à venir reposer sur la surface horizontale de la plaque de soutien (8).

15. Dispositif selon l'une des revendications 1 à 8, **caractérisé en ce que** le retour du tube (1) dans la position de repos amène le levier basculant de nouveau dans sa position de départ.
